(19) Europäisches Patentamt
European Patent Office
Office européen des brevets

(11) **EP 2 285 187 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(51) Int Cl.:
*H05B 37/02* *(2006.01)*

(21) Anmeldenummer: **10005222.4**

(22) Anmeldetag: **19.05.2010**

(54) **Betriebssteuervorrichtung und Verfahren zur Steuerung des Betriebszustandes einer Leuchtmittelanordnung**

Operation control device and method for controlling the operational status of a lamp assembly

Dispositif de contrôle de l'opération et méthode pour contrôler l'état de fonctionnement d'un ensemble d'éclairage

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **16.07.2009 DE 102009033358**

(43) Veröffentlichungstag der Anmeldung:
**16.02.2011 Patentblatt 2011/07**

(73) Patentinhaber: **Elektrobau Oschatz GmbH & Co. KG**
**04758 Oschatz (DE)**

(72) Erfinder:
• **Lorenz, Mathias**
**09123 Chemnitz (DE)**
• **Frank, Friedrich**
**06231 Bad Dürrenberg (DE)**
• **Reichel, Stefan**
**04758 Liebschützberg (DE)**

(74) Vertreter: **Rüger, Barthelt & Abel**
**Postfach 10 04 61**
**73704 Esslingen a.N. (DE)**

(56) Entgegenhaltungen:
EP-A1- 1 286 570          WO-A1-2006/126240
WO-A1-2007/091175         DE-A1- 4 418 315
DE-A1-102005 020 406      DE-U1- 29 623 881
FR-A1- 2 847 760          GB-A- 2 143 966
US-E1- R E38 036

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Betriebssteuervorrichtung zur Steuerung des Betriebszustandes einer Leuchtmittelanordnung, insbesondere einer Leuchtmittelanordnung einer Straßenbeleuchtung, sowie ein entsprechendes Steuerverfahren. Bei einer Außenbeleuchtung, wie beispielsweise einer Straßenbeleuchtung, besteht der Bedarf den Energieverbrauch so gering wie möglich zu halten. Gleichzeitig muss eine ausreichende Beleuchtung von Straßen, Fußwegen, öffentlichen Plätzen und dergleichen sichergestellt sein, um eine Gefährdung von Verkehrsteilnehmern auszuschließen. Es ist daher bekannt, die Leuchtleistung der Leuchtmittelanordnung uhrzeitabhängig vorzugeben, sodass bei Dunkelheit die Leuchtleistung an das Verkehrsaufkommen angepasst werden kann. Zu Nachtzeiten, in denen nur wenig Verkehr herrscht, kann die Leuchtleistung der Leuchtmittelanordnung herabgesetzt werden. Dabei besteht ferner die Notwendigkeit eine Anpassung an die Jahreszeiten vorzunehmen, da sich die Morgen- und Abenddämmerung jahreszeitabhängig verschiebt.

Um diese Anforderungen zu erfüllen schlägt die DE 4418315 C2 vor, die Beleuchtungsdauer der Straßenbeleuchtung vom Einschalten eines Dämmerungsschalters zu Beginn eines Beleuchtungszyklus bis zum Ausschalten des Dämmerungsschalters zum Ende eines Beleuchtungszyklus zu messen und diesen Messwert abzuspeichern. Diese abgespeicherte Beleuchtungsdauer wird dann im darauf folgenden Beleuchtungszyklus zur Berechnung einer Einschaltzeit und einer Ausschaltzeit einer Energiesparphase für die Straßenbeleuchtung verwendet. Auf Basis der im vorherigen Beleuchtungszyklus gemessenen Beleuchtungsdauer wird die Nachtmitte berechnet. Ausgehend von diesem Bezugswert wird der Beginn der Energiesparphase sowie das Ende der Energiesparphase bestimmt. Das Verfahren berechnet somit rekursiv in jedem Beleuchtungszyklus die Nachtmitte und daraus die Ein- und Ausschaltzeit der Energiesparphase.

Aus DE 296 23 881 U1 ist eine Betriebssteuervorrichtung zur Steuerung des Betriebszustandes einer Leuchtmittelanordnung bekannt, mit einer der Leuchtmittelanordnung zugeordneten, einen Speicher und eine Zeitmesseinrichtung aufweisenden Steuereinheit, mit einem gesteuerten Versorgungsspannungsschalter, über den in der Abenddämmerung eine Versorgungsspannung an die Leuchtmittelanordnung anlegt wird, und mit einer im Speicher der Steuereinheit abgespeicherten Schalttabelle, die eine Vielzahl von Wertepaaren aus jeweils einem fest vorgegebenen Beleuchtungsdauerwert und einem zugeordneten Basiswert für eine Verzögerungsgröße aufweist.

GB 2 143 966 A beschreibt eine Steuereinrichtung zur Beleuchtungssteuerung. Die Steuereinrichtung weist eine Uhr auf, mit der die Zeit und das Datum bestimmt werden. Dann kann die Beleuchtung datums- und uhrzeitabhängig geschaltet werden. Für die Uhr muss ständig eine elektrische Versorgung bereitgestellt werden, beispielsweise durch eine Batterie.

Bei der aus WO 2007/091175 A1 bekannten Steuervorrichtung zur Beleuchtungssteuerung wird diese über die Versorgungsspannung der Beleuchtung mit elektrischer Energie versorgt. Um nach dem Abschalten der Versorgungsspannung noch elektrische Energie für die Steuereinrichtung zur Verfügung zu haben, ist ein Energiespeicher vorhanden. Somit können auch nach Abschalten der Versorgungsspannung noch Steuerungsfunktionen, beispielsweise Speichervorgänge, durchgeführt werden. Zur Beleuchtungssteuerung sind in einem Speicher Zeiten für den Sonnenauf- und Sonnenuntergang abgelegt, wodurch der genaue Tag im Jahr ermittelt werden kann.

Das aus WO 2006/126240 A1 bekannte Verfahren schlägt vor, eine Funktion in einem Speicher abzulegen, anhand der die aktuelle Jahreszeit bestimmt und eine Beleuchtung abhängig von der ermittelten Jahreszeit geschaltet werden kann.

Die Einrichtung und das Verfahren nach US RE 38,036 E verwenden eine interne Uhr zum Schalten einer Einrichtung, beispielsweise eine Beleuchtung. Diese Uhr muss stets mit elektrischer Energie versorgt werden. Mit Hilfe der Uhr soll die Uhrzeit zum Ein- und Ausschalten einer Versorgungsspannung und nicht die Helligkeit verwendet werden.

Auch bei dem aus DE 10 2005 020 406 A1 bekannten Verfahren wird das helligkeitsabhängige Schalten aufgrund von witterungsbedingten Einflüssen als nachteilig angesehen. Es wird daher zur Steuerung einer Beleuchtung zusätzlich die Zeitspanne von der Morgendämmerung bis zur Abenddämmerung gemessen. Hierfür wird eine Uhr benötigt, die auch dann mit elektrischer Energie versorgt werden muss, wenn keine Versorgungsspannung für die Beleuchtung zur Verfügung gestellt wird.

Bei der aus FR 28 47 760 A1 bekannten Einrichtung zur Beleuchtungssteuerung erfolgt eine Fehlerberechnung, um festzustellen, ob das Ein- oder Ausschalter der Versorgungsspannung der jahreszeitlichen Helligkeit entspricht oder durch einen Fehler verursacht wurde. Derart komplexe Berechnungen sollen erfindungsgemäß vermieden werden.

EP 1 286 570 A1 beschreibt ebenfalls ein Verfahren und eine Einrichtung, bei der anhand einer Datumsbestimmung eine Beleuchtung gesteuert wird. In einem Speicher sind Datum und Uhrzeit für Sonnenaufgang und Sonnenuntergang abgelegt und werden zur Leuchtungssteuerung verwendet.

Ausgehend hiervon kann es als Aufgabe der vorliegenden Erfindung angesehen werden, den Rechenaufwand zu reduzieren und dennoch eine Anpassung der Energiesparphase an die sich jahreszeitlich ändernden Dämmerungszeiten zu erlauben.

Diese Aufgabe wird durch eine Betriebssteuervorrichtung nach Anspruch 1 und ein Verfahren zur Steuerung des Betriebzustandes einer Leuchtmittelanordnung nach Anspruch 8 gelöst.

Die erfindungsgemäße Betriebssteuervorrichtung weist eine Steuereinheit mit einem Speicher auf, die der zur steuernden Leuchtmitteleinheit zugeordnet ist. Im Speicher der Steuereinheit ist eine Schalttabelle abgespeichert. Die Schalttabelle enthält eine Vielzahl von fest vorgegebenen Beleuchtungsdauerwerten. Jedem Beleuchtungsdauerwert ist ein Basiswert einer Verzögerungsgröße fest zugeordnet. Die Verzögerungsgröße charakterisiert eine Verzögerungszeitdauer, die die Zeitdauer zwischen dem Einschalten der Spannungsversorgung der Steuereinheit durch einen gesteuerten Versorgungsspannungsschalter, zum Beispiel einen Dämmerungsschalter, und dem Beginn der Energiesparphase festlegt. Die Energiesparphase beginnt mithin nach Ablauf der Verzögerungszeitdauer seit dem Einschalten der Versorgungsspannung. Während der Energiesparphase reduziert die Steuereinheit die Leuchtleistung der zugeordneten Leuchtmittelanordnung, indem Sie beispielsweise eine oder mehrere der Leuchtmittel der Leuchtmittelanordnung vollständig abschaltet oder alternativ ein oder mehrere und insbesondere alle Leuchtmittel der Leuchtmittelanordnung mit reduzierter Leuchtleistung betreibt, beispielsweise durch Dimmen der Leuchtmittel.

In der Schalttabelle sind somit mehrere Wertepaare definiert, die jeweils aus einem Beleuchtungsdauerwert und einem zugeordneten Basiswert für die Verzögerungsgröße bestehen. Weitere Tabelleneinträge sind nicht notwendig, so dass die Schalttabelle lediglich einen geringen Speicherplatzbedarf aufweist. Über den abgespeicherten Beleuchtungsdauerwert kann sehr einfach der gewünschte dazugehörige Basiswert für die Verzögerungszeitdauer ausgewählt werden. Der Start der Energiesparphase kann auf diese Weise sehr einfach an die Beleuchtungsdauer vom Einschalten bis zum Ausschalten der Versorgungsspannung angepasst werden. Es ist somit möglich, denn Beginn der Energiesparphase ohne Rechenaufwand sehr einfach vorzugeben, indem ein der tatsächlichen Dunkelheitsdauer sehr nahe kommender Beleuchtungsdauerwert aus der Schalttabelle ausgewählt wird, dessen zugeordnete Verzögerungsgröße die Verzögerungsdauer definiert. Die Steuereinheit kommt dabei ohne Uhr aus. Dies hat zur Folge, dass die Steuereinheit keine dauernde Energieversorgung benötigt. Sie führt ihre Steueraufgaben lediglich bei anliegender Versorgungsspannung durch. Ist die Versorgungsspannung durch den Versorgungsspannungsschalter bei ausreichender Helligkeit abgeschaltet, wird auch die Steuereinheit deaktiviert und von der elektrischen Energieversorgung abgetrennt. Ein interner Energiespeicher, wie beispielsweise eine Batterie oder ein Kondensator, ist nicht notwendig und nicht vorgesehen.

Bei einer vorteilhaften Ausführung kann die Verzögerungszeitdauer und/oder die Dauer der Energiesparphase angepasst werden. Zum Beispiel kann ein Bedienelement vorhanden sein, über das die betreffende Zeitdauer angepasst werden kann.

Bei dem Versorgungsspannungsschalter kann es sich um einen Dämmerungsschalter handeln, der die Versorgungsspannung bei Unterschreiten eines erfassten Umgebungshelligkeitswertes an die Steuereinheit anlegt.

Die Betriebssteuervorrichtung weist eine Zeitmesseinrichtung auf, die die tatsächliche Beleuchtungsdauer misst, während der die Versorgungsspannung an der Steuereinheit anliegt. Die Zeitmesseinrichtung kann Bestandteil der Steuereinrichtung sein. Dadurch ergibt sich die Möglichkeit, die gemessene tatsächliche Beleuchtungsdauer im nächsten Beleuchtungszyklus zu berücksichtigen und den zugehörigen abgespeicherten Basiswert für die Verzögerungsgröße für die Betriebssteuerung der Leuchtmittelanordnung zu verwenden. Durch diese Maßnahme passt sich die Steuerung selbsttätig an die tatsächlichen Beleuchtungsverhältnisse an, die sich im Laufe der Zeit ändern. Liegt kein Messwert für die tatsächliche Beleuchtungsdauer vor, beispielsweise bei der ersten Inbetriebnahme der Betriebssteuervorrichtung, so wird ein abgespeicherter Beleuchtungsdauerwert als gewünschter Startwert für den Erstbetrieb vorgegeben. Die Erfindung stellt damit sicher, dass bereits im ersten Beleuchtungszyklus eine energiesparende Leistungsreduzierung erfolgt. Im darauf folgenden zweiten Beleuchtungszyklus ist die Beleuchtungssteuerung bereits an die tatsächlichen Verhältnisse angepasst.

Ein Energiespargrundwert für die Dauer der Energiesparphase ist im Speicher vorgegeben. Insbesondere kann ein einziger Wert für alle in der Schalttabelle abgelegten Wertepaare verwendet werden. Dadurch ist der Speicherplatzbedarf gering. Alternativ wäre es jedoch auch möglich, jedem Beleuchtungsdauerwert in der Schalttabelle einen Energiespargrundwert für die Dauer der Energiesparphase zuzuordnen.

Zur Steuerung der Leuchtleistung der Leuchtmittelanordnung kann die Steuereinheit vorzugsweise einen Mikrocontroller aufweisen. Zur Dimmung ist es beispielsweise möglich, dass der Mikrocontroller einen gesteuerten Schalter gemäß einem pulsbreitenmodulierten Steuersignal öffnet und schließt, um die Leuchtleistung der Leuchtmittel an Ordnung wunschgemäß einzustellen.

Bevorzugt ist der Speicher der Steuereinheit als nicht-flüchtiger Speicher ausgeführt, so dass die abgespeicherten Daten auch dann erhalten bleiben, wenn keine Versorgungsspannung an der Steuereinheit anliegt. Bei dieser Ausführung kann eine interne Energiequelle zur Versorgung des Speichers entfallen.

Vorteilhafte Ausgestaltungen der Erfindung ergeben sich aus den Patentansprüchen und der Beschreibung. Die Beschreibung beschränkt sich dabei auf wesentliche Merkmale der Erfindung und sonstiger Gegebenheiten. Die Zeichnung ist ergänzend heranzuziehen. Es zeigen:

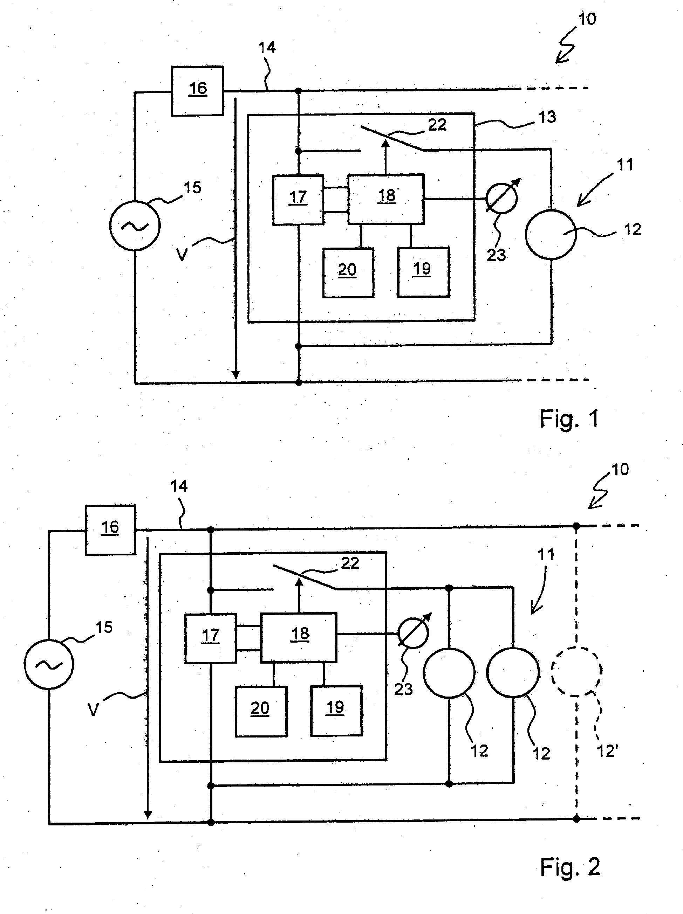

Figur 1 ein Blockschaltbild einer ersten Ausführungsform einer Betriebssteuervorrichtung,

Figur 2 ein Blockschaltbild einer zweiten Ausführungsform einer Betriebssteuervorrichtung,

Figur 3 den beispielhaften zeitlichen Verlauf der Versorgungsspannung sowie der Leuchtleistung einer Leuchtmittelanordnung,

Figur 4 eine in einem Speicher der Betriebssteuervorrichtung abgespeicherte beispielhafte Schalttabelle und

Figur 5 ein Flussdiagramm eines Ausführungsbeispiels eines erfindungsgemäßen Steuerverfahrens.

Die Erfindung betrifft eine Betriebssteuervorrichtung 10 für den Betrieb einer oder mehrere Leuchtmittelanordnungen 11, beispielsweise von Leuchtmittelanordnungen 11 einer Straßenbeleuchtung. Jede Leuchtmittelanordnung 11 kann ein oder mehrere Leuchtmittel 12 aufweisen, beispielsweise Gasentladungslampen. Jeder Leuchtmittelanordnung 11 ist eine Steuereinheit 13 zugeordnet, die den Betriebszustand der Leuchtmittelanordnung 11 steuert und insbesondere deren Leuchtleistung einstellt. Über die Steuereinheit 13 können die Leuchtmittel 12 der Leuchtmittelanordnung eingeschaltet, ausgeschaltet oder in einem gedimmten Betriebszustand betrieben werden. Die Dimmung kann beispielsweise über eine Pulsbreitenmodulation erfolgen.

Sowohl die Energieversorgung der Leuchtmittelanordnung 11, als auch die Energieversorgung der Steuereinheit 13 erfolgt über eine Versorgungsleitung 14, die an eine Spannungsquelle 15 angeschlossen ist. In die Versorgungsleitung 14 ist ein gesteuerter und beispielsgemäß helligkeitsabhängiger Versorgungsspannungsschalter, der hier als Dämmerungsschalter 16 ausgeführt ist, eingesetzt. Bei geschlossenem Dämmerungsschalter 16 liegt an die Steuereinheit 13 der Betriebssteuervorrichtung 10 eine Versorgungsspannung V an. Ist der Dämmerungsschalter 16 geöffnet ist die Steuereinheit 13 von der Spannungsquelle 15 getrennt. Anstelle des Dämmerungsschalters 16 kann auch ein zeitabhängig gesteuerter Versorgungsspannungsschalter zum Einsatz kommen.

Eine Betriebssteuervorrichtung 10 kann eine oder mehrere Steuereinheiten 13 aufweisen, wobei insbesondere jedem Leuchtmittel 12 der Straßenbeleuchtung eine Steuereinheit 13 zugeordnet ist. Es ist auch möglich, eine oder mehrere zusätzliche Leuchtmittel 12' vorzusehen, denen keine Steuereinheit 13 zugeordnet wird und die direkt an die Versorgungsleitung 14 angeschlossen sind. Diese zusätzlichen Leuchtmittel 12' werden nur durch den Dämmerungsschalter 16 gesteuert ein- bzw. ausgeschaltet.

Die Steuereinheit 13 weist einen Wandler 17 auf, der an die Versorgungsleitung 14 angeschlossen ist und eine Betriebsspannung US für die Steuereinheit 13 bereit stellt. Die Betriebsspannung US kann nur zur Verfügung gestellt werden, wenn der Dämmerungsschalter 16 geschlossen ist und die Versorgungsspannung V an der Steuereinheit 13 anliegt. Die Steuereinheit 13 weist ferner einen Mikrocontroller 18 einen nicht-flüchtigen Speicher 19 und eine Zeitmesseinheit 20 auf, die über die Betriebsspannung US des Wandlers 17 versorgt werden. Der Speicher 19 und die Zeitmesseinrichtung 20 sind mit dem Mikrocontroller 18 verbunden. Der Mikrocontroller 18 steuert einen gesteuerten Schalter 22 der Steuereinheit 13 an, über den die Versorgungsspannung V an die von der Steuereinheit 13 zu steuernde Leuchtmittelanordnung 11 angelegt werden kann. Ein mit der Steuereinheit 13 und zum Beispiel mit dem Mikrocontroller 18 verbundenes Bedienelement 23 dient zur benutzer- oder anwendungsabhängigen Einstellung der Betriebssteuervorrichtung 10, worauf im Folgenden noch näher eingegangen wird.

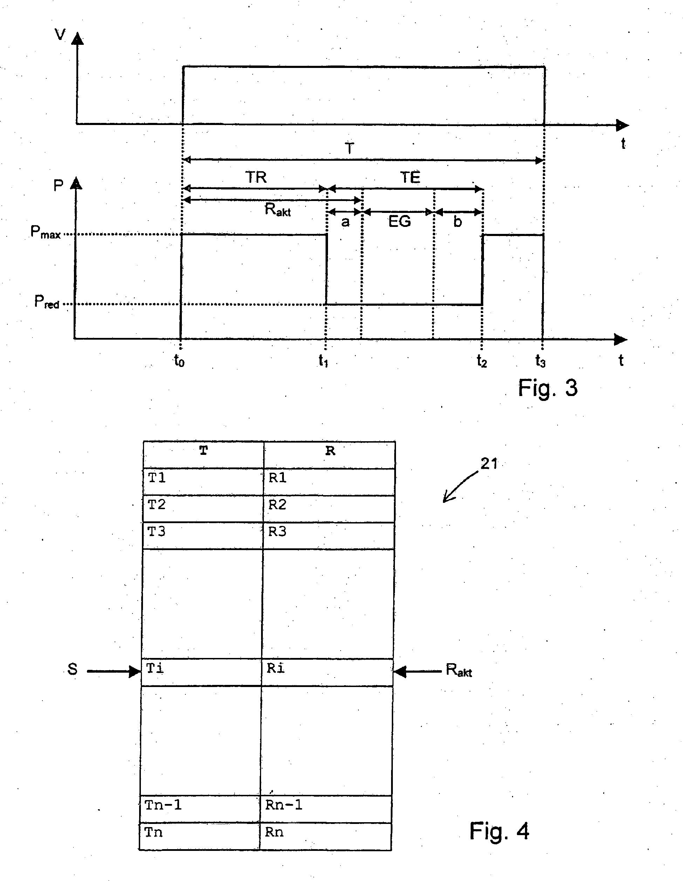

Im Speicher 19 ist eine Schalttabelle 21 abgelegt, wie sie in Figur 4 dargestellt ist. Die Schalttabelle 21 weist eine Vielzahl von Wertepaaren auf, beispielsweise n Wertepaare. Jedes Wertepaar besteht aus einem Beleuchtungsdauerwert Ti, dem jeweils ein Basiswert Ri für eine Verzögerungsgröße RG zugeordnet ist, wobei jeweils i=1 bis n gilt. Die Wertepaare in der Schalttabelle 21 sind fest vorgegeben, so dass es genügt die Schalttabelle 21 einmal zu erstellen.

Die abgespeicherten Beleuchtungsdauerwerte Ti geben die Zeitdauer der Dunkelperiode an. Der Beleuchtungsdauerwert Ti entspricht der Zeitdauer vom Schließen des Dämmerungsschalters 16 in der Abenddämmerung bis zum Öffnen des Dämmerungsschalters 16 in der Morgendämmerung. Dies entspricht einem Beleuchtungszyklus der Straßenbeleuchtung. Da das helligkeitsabhängige Schließen und Öffnen des Dämmerungsschalters 16 jahreszeitlich schwankt, sind in der Schalttabelle 21 eine Vielzahl von möglichen Beleuchtungsdauerwerten Ti abgespeichert. Beim Betrieb der Betriebssteuervorrichtung 10 wird der jeweils passende Beleuchtungssteuerwert Ti aus der Schalttabelle 21 ausgewählt. Der kleinste Beleuchtungsdauerwert T1 kann beispielsweise im Bereich von 0-5 Stunden festgelegt werden, insbesondere T1=3 Stunden. Ausgehend hiervon wird in vorgegebenen Zeitstufen von 5-20 Minuten eine Vielzahl weiterer Beleuchtungsdauerwerte Ti vorgegeben, wobei der größte Beleuchtungsdauerwert Tn im Bereich zumindest 20 Stunden und beispielsgemäß Tn=24 Stunden beträgt. Die Zeitschritte zwischen den einzelnen Beleuchtungsdauerwerten Ti sind beispielsgemäß konstant und betragen 10 Minuten. Dadurch ist eine ausreichende Übereinstimmung der abgespeicherten Beleuchtungsdauerwerte Ti gegenüber der tatsächlichen Beleuchtungsdauer $T_{ist}$ zwischen dem Einschalten und dem Ausschalten des Dämmerungsschalters 16 gegeben.

Jedem Beleuchtungsdauerwert Ti ist ein Basiswert Ri einer Verzögerungsgröße RG zugeordnet. Die Verzögerungsgröße RG charakterisiert die Verzögerungszeitdauer TR zwischen dem Einschalten der Versorgungsspannung V und dem Beginn einer Energiesparphase TE. Beim bevorzugten Ausführungsbeispiel ist die Verzögerungszeitdauer anhand der Anzahl von Zeitzyklen bekannter Dauer definiert.

Die Verzögerungsgröße RG kann über das Bedienelement 23 durch einen Benutzer verändert werden. Beim Ausführungsbeispiel besteht für den Benutzer die Möglichkeit, die Dauer der Energiesparphase TE bezogen auf die sich aus dem Energiespargrundwert EG ergebenden Schaltzeitpunkte zeitlich nach vorne und/oder hinten zu verlängern. Bei einer zeitlichen Verschiebung des Beginns der Energiesparphase nach vorne verkürzt sich dadurch die Verzögerungszeitdauer TR entsprechend. Ein Energiespargrundwert EG für die Dauer der Energiesparphase TE - beispielsweise sechs Stunden - ist im Speicher 19 fest vorgegeben und gilt für alle in der Schalttabelle 21 angegeben Wertpaare. Beispielsgemäß werden zwei Zeitabschnitte a, b über das Bedienelement eingestellt. Der erste Zeitabschnitt a verschiebt den Beginn der Energiesparphase TE zeitlich nach vorne und verkürzt die Verzögerungszeitdauer. Der zweite Zeitabschnitt b verschiebt das Ende der Energiesparphase. Somit gilt:

$$TE = a + EG + b.$$

$$TR = Ri - a.$$

Während der Energiesparphase TE reduziert die Steuereinheit 13 die Leuchtleistung P der zugeordneten Leuchtmittelanordnung 11. Dabei können einzelne Leuchtmittel 12 vollständig abgeschaltet oder eine oder mehrere Leuchtmittel 12 durch die Steuereinheit 13 gedimmt werden.

Die Zeitmesseinrichtung 20 der Steuereinheit 13 misst die tatsächliche Beleuchtungsdauer $T_{ist}$ während der der Dämmerungsschalter 16 geschlossen ist und somit die Versorgungsspannung V an der Steuereinheit 13 anliegt.

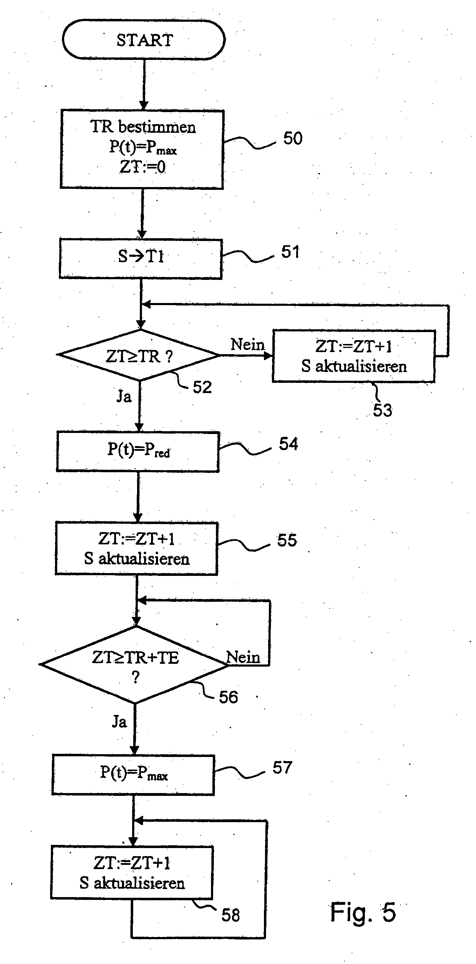

Die Arbeitsweise der Betriebssteuervorrichtung 10 wird im Folgenden insbesondere anhand der Figuren 3 und 5 näher erläutert.

Das Steuerverfahren für einen Beleuchtungszyklus beginnt mit dem Schließen des Dämmerungsschalters 16 zum ersten Zeitpunkt $t_0$. Der Mikrocontroller 18 bestimmt dann im ersten Verfahrensschritt 50 zunächst die Verzögerungszeitdauer TR. Hierfür wird der aktuelle Basiswert $R_{akt}$ der Verzögerungsgröße RG aus der Schalttabelle 21 ausgelesen. Der aktuelle Basiswert $R_{akt}$ der Verzögerungsgröße RG ist derjenige, der dem als Startwert S markierten Beleuchtungsdauerwert Ti zugeordnet ist. Der Startwert S ergibt sich aus der tatsächlichen Beleuchtungsdauer $T_{ist}$, die die Zeitmesseinrichtung 20 im vorangegangen Beleuchtungszyklus gemessen hat. Liegt noch kein Messwert für die tatsächliche Beleuchtungsdauer $T_{ist}$ vor, beispielsweise bei der ersten Inbetriebnahme der Betriebsteuervorrichtung 10, so ist ein Beleuchtungsdauerwert Ti der Schalttabelle 21 als erster Startwert S vorgegeben.

Im ersten Verfahrensschritt 50 wird des Weiteren die Leuchtleistung P des Leuchtmittels 12 auf die maximale Leuchtleistung $P_{max}$ eingestellt, sowie die Zeitmessung durch die Zeitmesseinrichtung 20 gestartet, was im Flussdiagramm nach Figur 5 durch das Setzen eines Zeitzählers ZT auf den Wert Null veranschaulicht ist. Der Zeitzähler wird im weiteren Verfahrensverlauf zyklisch erhöht.

Im darauf folgenden zweiten Verfahrensschritt 51 wird die Markierung des Startwerts S in der Schalttabelle 21 auf den niedrigsten Beleuchtungsdauerwert T1 gesetzt. Mit fortschreitender Zeitmessung der tatsächlichen Beleuchtungsdauer $T_{ist}$ wird diese Startwertmarkierung entsprechend aktualisiert, so dass sie immer den Beleuchtungsdauerwert Ti in der Schalttabelle 21 markiert, der dem aktuellen Messwert der tatsächlichen Beleuchtungsdauer $T_{ist}$ am nächsten kommt. Auf diese Weise wird für den darauf folgenden Beleuchtungszyklus der Beleuchtungsdauerwert Ti in der Schalttabelle 21 als Startwert S markiert, der der tatsächlichen Beleuchtungsdauer $T_{ist}$ im vorangegangen Beleuchtungszyklus am nächsten kam. Dadurch liegt auch der aktuelle Basiswert $R_{akt}$ für die Verzögerungsgröße RG für den darauf folgenden Beleuchtungszyklus fest.

Im Anschluss an den zweiten Verfahrensschritt 51 wird im dritten Verfahrensschritt 52 geprüft, ob der Zeitzähler ZT größer oder gleich der aktuellen Verzögerungszeitdauer TR ist. Ist der Zeitzähler ZT kleiner als die aktuelle Verzögerungszeitdauer TR, wird der Zeitzähler ZT in einem vierten Verfahrensschritt 53 inkrementiert und die Startwertmarkierung S in der Schalttabelle 21 aktualisiert, das heißt auf den Beleuchtungsdauerwert Ti gesetzt, der dem aktuellen Wert des Zeitzählers ZT am nächsten kommt.

Die Schleife von drittem und viertem Verfahrensschritt 52, 53 wird so lange durchlaufen, bis der Zeitzähler ZT zumindest der Verzögerungszeitdauer TR entspricht. Dies ist beim Ausführungsbeispiel zum zweiten Zeitpunkt $t_1$ der Fall. Zu diesem zweiten Zeitpunkt $t_1$ ist die durch die aktuelle Verzögerungsgröße $R_{axt}$ bestimmte Verzögerungszeitdauer TR abgelaufen und die Energiesparphase TE beginnt. Die Energiesparphase TE beginnt bei

$$t_1 = t0 + TR = t0 + R_{akt} - a.$$

Während der Energiesparphase TE wird beim bevorzugten Ausführungsbeispiel das der Steuereinheit 13 zugeordnete Leuchtmittel 12 gedimmt. Hierfür öffnet und schließt der Mikrocontroller 18 den gesteuerten Schalter 21 entsprechend einem pulsbreitenmodulierten-Signal. Die Leuchtleistung P des Leuchtmittels 12 wird auf diese Weise im fünften Verfahrensschritt 54 von der maximalen Leuchtleistung $P_{max}$ auf eine reduzierte Leuchtleistung $P_{red}$ reduziert.

Im darauf folgenden sechsten Verfahrensschritt 55 wird der Zeitzähler ZT wieder um 1 inkrementiert und die Startwertmarkierung S in der Schalttabelle 21 aktualisiert. Anschließend wird im siebten Verfahrensschritt 56 überprüft, ob die Energiesparphase TE beendet werden soll. Hierzu kann beispielsweise geprüft werden, ob der Zeitzähler ZT einen Wert erreicht hat, der zumindest der Summe aus der Verzögerungszeitdauer TR und der Dauer der Energiesparphase TE entspricht. Ist dies nicht der Fall, wird zum sechsten Verfahrensschritt 55 zurück gesprungen. Andernfalls wird das Verfahren im achten Verfahrensschritt 57 fortgesetzt und die Energiesparphase TE beendet. Die Steuereinheit 13 erhöht die Leuchtleistung P der Leuchtmittelanordnung 11 wieder auf die maximale Leuchtleistung $P_{max}$. Die Energiesparphase TE endet zum dritten Zeitpunkt $t_2$ bei

$$t_2 = t_1 + TE = t_1 + a \cdot EG + b.$$

Im Anschluss daran wird im neunten Verfahrensschritt 58 die Zeitmessung der tatsächlichen Beleuchtungsdauer $T_{ist}$ fortgesetzt und die Startwertmarkierung S entsprechend der fortschreitenden Zeitmessung aktualisiert. Das Verfahren wird in diesem Verfahrensschritt 58 zu einem vierten Zeitpunkt $t_3$ dadurch beendet, dass der Dämmerungsschalter 16 die Versorgungsspannung V abschaltet. In diesem Moment markiert der Startwert S in der Schalttabelle 21 den Beleuchtungsdauerwert Ti, der der tatsächlichen Beleuchtungsdauer $T_{ist}$ am nächsten kommt. Dieser Messwert steht dem darauf folgenden Beleuchtungszyklus zu Verfügung und der zugehörige Basiswert Ri für die Verzögerungsgröße RG kann im entsprechenden Verfahrensschritt 50 des nächsten Beleuchtungszyklus ausgelesen werden.

Alternativ kann das Verfahren auch in einem anderen Verfahrensschritt durch Öffnen des Dämmerungsschalters 16 beendet werden, also auch während der Energiesparphase TE, sofern diese zum dritten Zeitpunkt $t_2$ noch nicht beendet sein sollte.

Es ist ferner möglich, einer oder mehreren der Basiswerten Ri für die Verzögerungsgröße RG den Wert null zuzuordnen, so dass nach dem Schließen des Dämmerungsschalters 16 die Energiesparphase TE unmittelbar beginnt.

Das Bedienelement kann zusätzlich eine Test-Betriebsstellung aufweisen. In dieser Test-Betriebsstellung wird die Leuchtmittelanordnung 11 nach wenigen Sekunden in den Energiesparbetrieb umgeschaltet. Dadurch kann zum Beispiel beim Installieren der Betriebssteuervorrichtung 10 oder während einer Fehlersuche die korrekte Funktionsweise überprüft werden. Beim Ausführungsbeispiel beginnt der Energiesparbetrieb etwa 6 Sekunden nach dem Umschalten des Bedienelements 23 in die Test-Betriebsstellung.

Das Zeitverhalten einer Außen- bzw. Straßenbeleuchtung kann für jede das Leuchtmittel 12 bildende Straßenlampe separat eingestellt werden. Es ist daher möglich, den Beginn sowie das Ende der Energiesparphase TE abhängig vom zu beleuchtenden Bereich (Fußgängerweg, Nebenstraße, Hauptverkehrsstraße, usw.) einzustellen.

Die Erfindung betrifft eine Betriebssteuervorrichtung 10 und ein Betriebssteuerverfahren zur Steuerung einer Leuchtmittelanordnung 11 mit einem oder mehreren Leuchtmitteln 12 einer Straßenbeleuchtung. Eine Steuereinheit 13 steuert die Leuchtleistung P der zugeordneten Leuchtmittelanordnung 11. Die Steuereinheit 13 verfügt über einen Speicher 19 in dem eine Schalttabelle 21 mit einer Vielzahl von Wertepaaren abgespeichert ist. Jedes Wertepaar besteht aus einem fest vorgegebenen Beleuchtungsdauerwert Ti und jeweils einem zugeordneten Basiswert Ri für eine Verzögerungsgröße RG. Ein Dämmerungsschalter 16 legt eine Versorgungsspannung V an die Steuereinheit 13 und die zugeordnete Leuchtmittelanordnung 11 an. Die Verzögerungsgröße Ri definiert die Verzögerungszeitdauer TR vom Anlegen der Versorgungsspannung V bis zum Beginn einer Energiesparphase TE während der die Leuchtmittelanordnung 11 mit reduzierter Leuchtleistung $P_{red}$ betrieben wird. Die Zeit zwischen dem Öffnen und Schließen des Dämmerungsschalters 16 gibt die tatsächliche Beleuchtungsdauer $T_{ist}$ an. Aus der Schalttabelle kann anhand eines Vergleichs von abgespeicherten Beleuchtungsdauerwerten Ti mit der tatsächlichen Beleuchtungsdauer $T_{ist}$ die vorgegebene, gewünschte Verzögerungszeitdauer TR bestimmt werden. Auf diese Weise kann der Beginn der Energiesparphase TE sehr einfach ohne Rechenaufwand eingestellt werden. Die Dauer der Energiesparphase TE ist vorzugsweise konstant und im Speicher 19 der Steuereinheit 13 abgelegt.

Bezugszeichnliste:

10  Betriebssteuervorrichtung
11  Leuchtmittelanordnung
12  Leuchtmittel

| 13 | Steuereinheit |
|---|---|
| 14 | Versorgungsleitung |
| 15 | Spannungsquelle |
| 16 | Dämmerungsschalter |
| 17 | Wandler |
| 18 | Mikrokontroller |
| 19 | Speicher |
| 20 | Zeitmesseinrichtung |
| 21 | Schalttabelle |
| 22 | gesteuerter Schalter |
| 23 | Bedienelement |

50-58    Verfahrensschritt

| a | erster Zeitabschnitt |
|---|---|
| b | zweiter Zeitabschnitt |
| EG | Energiespargrundwert |
| M | Bezugszeitpunkt |
| P | Leuchtleistung |
| $P_{max}$ | maximale Leuchtleistung |
| $P_{red}$ | reduzierte Leuchtleistung |
| RG | Verzögerungsgröße |
| $R_i$ | Basiswert für die Verzögerungsgröße |
| $R_{axt}$ | aktueller Basiswert |
| S | Startwert |
| $T_i$ | Beleuchtungsdauer |
| $T_{ist}$ | tatsächliche Beleuchtungsdauer |
| TE | Energiesparphase |
| TR | Verzögerungszeitdauer |
| $t_0$-$t_3$ | Zeitpunkt |
| US | Betriebsspannung |
| V | Versorgungsspannung |
| ZT | Zeitzähler |

**Patentansprüche**

1. Betriebssteuervorrichtung zur Steuerung des Betriebszustandes einer Leuchtmittelanordnung (11), insbesondere einer Straßenbeleuchtung,

mit einer der Leuchtmittelanordnung (11) zugeordneten, einen Speicher (19) und eine Zeitmesseinrichtung (20) aufweisenden Steuereinheit (13), und

mit einem gesteuerten Versorgungsspannungsschalter (16) **dadurch gekennzeichnet, dass** der Versorgungsspannungsschalter (16) in der Abenddämmerung eine Versorgungsspannung (V) an die Steuereinheit (13) anlegt, wobei die Steuereinheit (13) ihre Steueraufgaben lediglich bei anliegender Versorgungsspannung (V) durchführt, und deaktiviert und von der Versorgungsspannung (V) abgetrennt ist, wenn die Versorgungsspannung (V) durch den Versorgungsspannungsschalter (16) bei ausreichender Helligkeit abgeschaltet ist,

wobei die Betriebssteuervorrichtung ferner eine im Speicher (19) der Steuereinheit (13) abgespeicherten Schalttabelle (21) aufweist, die eine Vielzahl von Wertepaaren aus jeweils einem fest vorgegebenen Beleuchtungsdäuerwert ($T_i$) und einem zugeordneten Basiswert ($R_i$) für eine Verzögerungsgröße (RG) besteht,

wobei der Beleuchtungsdauerwert ($T_i$) der Zeitdauer eines Beleuchtungszyklus vom Schließen des Versorgungsspannungsschalters (16) in der Abenddämmerung bis zum Öffnen des Versorgungsspannungsschalters (16) in der Morgendämmerung entspricht, und wobei die Verzögerungsgröße (RG) eine Verzögerungszeitdauer (TR) ab dem Einschalten der Versorgungsspannung (V) bis zum Beginn einer Energiesparphase (TE) während des Beleuchtungszyklus festlegt,

wobei in jedem Beleuchtungszyklus der Beleuchtungsdauerwert ($T_i$) in der Schalttabelle (21) als Startwert (S) markiert wird, der einer durch die Zeitmesseinrichtung (20) gemessenen tatsächlichen Beleuchtungsdauer ($T_{ist}$) am nächsten kommt,

wobei ein aktueller Wert der Verzögerungsgröße ($R_{akt}$) derjenige ist, der dem als Startwert (S) in der Schalttabelle (21) markierten Beleuchtungsdauerwert (T) zugeordnet ist und dieser aktuelle Wert der Verzögerungsgröße ($R_{akt}$) die Verzögerungszeitdauer (TR) bis zum Beginn der Energiesparphase (TE) im aktuellen Beleuchtungszyklus angibt, wobei während der Energiesparphase (TE) die Steuereinheit (13) die Leuchtleistung (P) der zugeordneten Leuchtmittelanordnung (11) reduziert.

**2.** Betriebssteuervorrichtung nach Anspruch 1,
**dadurch gekennzeichnet, dass** es sich bei dem Versorgungsspannungsschalter um einen Dämmerungsschalter (16) handelt, der die Versorgungsspannung (V) bei Unterschreiten eines erfassten Umgebungshelligkeitswertes an die Steuereinheit (13) anlegt.

**3.** Betriebssteuervorrichtung nach Anspruch 1,
**dadurch gekennzeichnet, dass** während der Energiesparphase (TE) ein oder mehrere Leuchtmittel (12) der Leuchtmittelanordnung (11) abgeschaltet werden.

**4.** Betriebssteuervorrichtung nach Anspruch 1,
**dadurch gekennzeichnet, dass** während der Energiesparphase (TE) ein oder mehrere Leuchtmittel (12) der Leuchtmittelanordnung (11) von der Steuereinheit (13) gedimmt werden.

**5.** Betriebssteuervorrichtung nach Anspruch 1,
**dadurch gekennzeichnet, dass** die Steuereinheit (13) einen Mikrokontroller (18) aufweist.

**6.** Betriebssteuervorrichtung nach Anspruch 1,
**dadurch gekennzeichnet, dass** es sich bei dem Speicher (19) um einen nicht-flüchtigen Speicher handelt.

**7.** Betriebssteuervorrichtung nach Anspruch 1,
**dadurch gekennzeichnet, dass** ein Bedienelement (23) vorhanden ist, das eine Anpassung der Verzögerungszeitdauer (TR) und/oder der Dauer der Energiesparphase (TE) durch einen Bediener ermöglicht.

**8.** Verfahren zur Steuerung des Betriebszustandes einer Leuchtmittelanordnung (11), insbesondere einer Straßenbeleuchtung,
**dadurch gekennzeichnet, dass** ein gesteuerten Versorgungsspannungsschalter (16) in der Abenddämmerung eine Versorgungsspannung (V) an eine Steuereinheit (13) anliegt, wobei die Steuereinheit (13) ihre Steueraufgaben lediglich bei anliegender Versorgungsspannung (V) durchführt, und deaktiviert und von der elektrischen Energieversorgung abgetrennt ist, wenn die Versorgungsspannung durch einen Versorgungsspannungsschalter (16) bei ausreichender Helligkeit abgeschaltet ist,
bei dem mit einem Start eine Zeitmessung (ZT) beginnt,
wobei in einer abgespeicherten Schalttabelle (21) mehrere Wertepaare ($T_i$, $R_i$) definiert sind, die jeweils aus einem Beleuchtungsdauerwert (T) und einem zugeordneten Basiswert ($R_i$) für eine Verzögerungsgröße (RG) bestehen
wobei der Beleuchtungsdauerwert (Ti) der Zeitdauer eines Beleuchtungszyklus vom Schließen des Versorgungsspannungsschalters (16) in der Abenddämmerung bis zum Öffnen des Versorgungsspannungsschalters (16) in der Morgendämmerung entspricht, und wobei die Verzögerungsgröße (RG) eine Verzögerungszeitdauer (TR) ab dem Einschalten der Versorgungsspannung (V) bis zum Beginn der Energiesparphase (TE) festlegt,
wobei in jedem Beleuchtungszyklus der Beleuchtungsdauerwert (Ti) in der Schalttabelle (21) als Startwert (S) markiert wird, der einer durch die Zeitmessung (ZT) gemessenen tatsächlichen Beleuchtungsdauer ($T_{ist}$) am nächs-ten kommt,
bei dem aus der abgespeicherten Schalttabelle (21) aus der Vielzahl von Wertepaaren ein aktueller Basiswert ($R_{akt}$) der Verzögerungsgröße (RG) ausgewählt wird, und die Auswahl des aktuellen Basiswerts ($R_{akt}$) anhand des Be-leuchtungsdauerwertes ($T_i$) erfolgt, der als Startwert (S) markiert ist, und dieser aktuelle Wert der Verzögerungsgröße ($R_{akt}$) die Verzögerungszeitdauer (TR) bis zum Beginn der Energiesparphase (TE) im aktuellen Beleuchtungszyklus angibt,
bei dem nach Ablauf einer von der Verzögerungsgröße (RG) bestimmten Verzögerungszeitdauer (TR) seit dem Start des Verfahrens die Energiesparphase (TE) gestartet wird, während der die Leuchtleistung (P) der Leuchtmittelanordnung (11) reduziert wird.

**Claims**

**1.** Operation control device for controlling the operating status of a lighting arrangement (11), in particular a street lighting,

with a control unit (13), which is associated with the lighting arrangement (11) and has a memory (19) and a time measurement device (20), and

with a controlled supply voltage switch (16),

**characterised in that** at dusk the supply voltage switch (16) applies a supply voltage (V) to the control unit (13), wherein the control unit (13) performs its control tasks only when supply voltage (V) is applied, and is deactivated and cut off from the supply voltage (V) when the supply voltage (V) is switched off by the supply voltage switch (16) when there is sufficient light intensity,

wherein the operation control device additionally has a connection chart (21), which comprises a plurality of value pairs respectively consisting of a fixedly predetermined lighting duration value ($T_i$) and an assigned base value ($Ri$) for a delay magnitude (RG),

wherein the lighting duration value (Ti) corresponds to the time duration of a lighting cycle from the switching off of the supply voltage switch (16) at dusk to the switching on of the supply voltage switch (16) at dawn, and wherein the delay magnitude (RG) defines a delay time duration (TR) from the supply voltage (V) being switched on to the beginning of an energy saving phase (TE) during the lighting cycle,

wherein in each lighting cycle the lighting duration value (Ti) is marked in the connection chart (21) as starting value (S), which comes closest to an actual lighting duration ($T_{ist}$) measured by the time measurement device (20),

wherein a current value of the delay magnitude ($R_{akt.}$) is that assigned to the lighting duration value (T) marked as starting value (S) in the connection chart (21) and this current value of the delay magnitude ($R_{akt.}$) indicates the delay time duration (TR) to the beginning of the energy saving phase (TE) in the current lighting cycle,

wherein during the energy saving phase (TE) the control unit (13) reduces the illumination power (P) of the associated lighting arrangement.

2. Operation control device according to claim 1, **characterised in that** the supply voltage switch is a photoelectric lighting controller (16), which applies the supply voltage (V) to the control unit (13) when the light intensity is below an acquired ambient brightness value.

3. Operation control device according to claim 1, **characterised in that** one or more lights (12) of the lighting arrangement (11) are switched off during the energy saving phase (TE).

4. Operation control device according to claim 1, **characterised in that** one or more lights (12) of the lighting arrangement (11) are dimmed by the control unit (13) during the energy saving phase (TE).

5. Operation control device according to claim 1, **characterised in that** the control unit (13) has a microcontroller (18).

6. Operation control device according to claim 1, **characterised in that** the memory (19) is a non-volatile memory.

7. Operation control device according to claim 1, **characterised in that** an operating element (23) is provided, which enables the delay time duration (TR) and/or the duration of the energy saving phase (TE) to be adjusted by an operator.

8. Method for controlling the operating status of a lighting arrangement (11), in particular a street lighting, **characterised in that** at dusk a controlled supply voltage switch (16) applies a supply voltage (V) to a control unit (13), wherein the control unit (13) performs its control tasks only when supply voltage (V) is applied, and is deactivated and cut off from the supply voltage (V) when the supply voltage (V) is switched off by a supply voltage switch (16) when there is sufficient light intensity,

in which a time measurement (ZT) begins with a start,

wherein multiple value pairs ($T_i$, $R_i$), which respectively comprise a lighting duration value ($T_i$) and an assigned base value (Ri) for a delay magnitude (RG), are defined in a stored connection chart (21),

wherein the lighting duration value (Ti) corresponds to the time duration of a lighting cycle from the switching off of the supply voltage switch (16) at dusk to the switching on of the supply voltage switch (16) at dawn, and wherein the delay magnitude (RG) defines a delay time duration (TR) from the supply voltage (V) being switched on to the beginning of an energy saving phase (TE),

wherein in each lighting cycle the lighting duration value (Ti) is marked in the connection chart (21) as starting value, which comes closest to an actual lighting duration ($T_{ist.}$) measured by the time measurement (ZT),

in which

wherein a current base value ($R_{akt.}$) of the delay magnitude ($R_{akt.}$) is selected from the plurality of value pairs from the stored connection chart (21) and the selection of the current base value ($R_{akt.}$) occurs on the basis of the lighting duration value ($T_i$), which is marked as starting value (S), and this current value of the delay magnitude ($R_{akt.}$)

indicates the delay time duration (TR) to the beginning of the energy saving phase (TE) in the current lighting cycle, in which the energy saving phase (TE) is started after a delay time duration (TR) from the start of the procedure determined by the delay magnitude (RG) has elapsed, during which energy saving phase the illumination power (P) of the lighting arrangement (11) is reduced.

**Revendications**

1. Dispositif de contrôle de fonctionnement destiné à commander l'état de fonctionnement d'un ensemble d'éclairage (11), en particulier d'un éclairage des voies publiques,
   comprenant une unité de commande (13) associée à l'ensemble d'éclairage (11) et présentant une mémoire (19) et un dispositif de mesure de temps (20), et
   comprenant un interrupteur de tension d'alimentation (16) commandé, **caractérisé en ce que**, au moment du crépuscule, l'interrupteur de tension d'alimentation (16) applique une tension d'alimentation (V) à l'unité de commande (13), l'unité de commande (13) exécutant ses fonctions de commande uniquement lorsque la tension d'alimentation (V) est appliquée, et étant désactivée et séparée de la tension d'alimentation (V) lorsque la tension d'alimentation (V) est coupée par l'interrupteur de tension d'alimentation (16), lorsque la luminosité est suffisante, sachant que le dispositif de contrôle de fonctionnement présente en outre une table d'états (21) qui est enregistrée dans la mémoire (19) de l'unité de commande (13) et comporte une multitude de couples de valeurs, constituées respectivement d'une valeur de durée d'éclairage (Ti), prédéterminée de manière fixe, et d'une valeur de base (Ri) associée pour une grandeur de temporisation (RG),
   sachant que la valeur de durée d'éclairage (Ti) correspond à la durée d'un cycle d'éclairage à partir de la fermeture de l'interrupteur de tension d'alimentation (16) au moment du crépuscule jusqu'à l'ouverture de l'interrupteur de tension d'alimentation (16) à l'aube, et sachant que la grandeur de temporisation (RG) définit une durée de temporisation (TR) à partir de la mise en circuit de la tension d'alimentation (V) jusqu'au début d'une phase d'économie d'énergie (TE) pendant le cycle d'éclairage,
   sachant que lors de chaque cycle d'éclairage, la valeur de durée d'éclairage (Ti) est marquée dans la table d'états (21) comme valeur de démarrage (S) qui se rapproche le plus d'une durée d'éclairage réelle ($T_{ist}$) mesurée par le dispositif de mesure de temps (20),
   sachant qu'une valeur actuelle de la grandeur de temporisation ($R_{akt}$) est celle qui est associée à la valeur de durée d'éclairage (T) marquée comme valeur de démarrage (S) dans la table d'états (21), et que cette valeur actuelle de la grandeur de temporisation ($R_{akt}$) indique la durée de temporisation (TR) jusqu'au début de la phase d'économie d'énergie (TE) dans le cycle d'éclairage actuel,
   sachant que pendant la phase d'économie d'énergie (TE), l'unité de commande (13) réduit la puissance d'éclairage (P) de l'ensemble d'éclairage (11) associé.

2. Dispositif de contrôle de fonctionnement selon la revendication 1, **caractérisé en ce que** l'interrupteur de tension d'alimentation est un interrupteur crépusculaire (16) qui applique la tension d'alimentation (V) à l'unité de commande (13), lorsque la luminosité ambiante passe en dessous d'une valeur recueillie.

3. Dispositif de contrôle de fonctionnement selon la revendication 1, **caractérisé en ce que** pendant la phase d'économie d'énergie (TE), une ou plusieurs lampes (12) de l'ensemble d'éclairage (11) sont mises hors tension.

4. Dispositif de contrôle de fonctionnement selon la revendication 1, **caractérisé en ce que**, pendant la phase d'économie d'énergie (TE), l'unité de commande (13) fait varier l'intensité lumineuse d'une ou plusieurs lampes (12) de l'ensemble d'éclairage (11).

5. Dispositif de contrôle de fonctionnement selon la revendication 1, **caractérisé en ce que** l'unité de commande (13) présente un microcontrôleur (18).

6. Dispositif de contrôle de fonctionnement selon la revendication 1, **caractérisé en ce que** la mémoire (19) est une mémoire non volatile.

7. Dispositif de contrôle de fonctionnement selon la revendication 1, **caractérisé en ce qu'**il est prévu un élément de commande (23) qui permet une adaptation de la durée de temporisation (TR) et/ou de la durée de la phase d'économie d'énergie (TE) par un opérateur.

8. Procédé de commande de l'état de fonctionnement d'un ensemble d'éclairage (11), en particulier d'un éclairage des voies publiques,

**caractérisé en ce qu'**un interrupteur de tension d'alimentation (16) commandé applique une tension d'alimentation (V) à une unité de commande (13) au moment du crépuscule, sachant que l'unité de commande (13) exécute ses fonctions de commande uniquement lorsque la tension d'alimentation (V) est appliquée, et est désactivée et séparée de l'alimentation en énergie électrique lorsque la tension d'alimentation est coupée par un interrupteur de tension d'alimentation (16), lorsque la luminosité est suffisante,

selon lequel une mesure de temps (ZT) commence avec un démarrage,

sachant que sont définies dans une table d'états (21) sauvegardée, plusieurs couples de valeurs (Ti, Ri) qui sont constituées respectivement d'une valeur de durée d'éclairage (Ti) et d'une valeur de base (Ri) associée pour une grandeur de temporisation (RG),

sachant que la valeur de durée d'éclairage (Ti) correspond à la durée d'un cycle d'éclairage à partir de la fermeture de l'interrupteur de tension d'alimentation (16) au moment du crépuscule jusqu'à l'ouverture de l'interrupteur de tension d'alimentation (16) à l'aube, et sachant que la grandeur de temporisation (RG) définit une durée de temporisation (TR) à partir de la mise en circuit de la tension d'alimentation (V) jusqu'au début de la phase d'économie d'énergie (TE),

sachant que lors de chaque cycle d'éclairage, la valeur de durée d'éclairage (Ti) est marquée dans la table d'états (21) en tant que valeur de démarrage (S) qui se rapproche le plus d'une durée d'éclairage réelle ($T_{ist}$) mesurée par la mesure de temps (ZT),

selon lequel une valeur de base actuelle ($R_{akt}$) de la grandeur de temporisation (RG) est sélectionnée parmi la pluralité de couples de valeurs dans la table d'états (21) sauvegardée, et la sélection de la valeur de base actuelle ($R_{akt}$) s'effectue à l'aide de la valeur de durée d'éclairage (Ti) qui est marquée en tant que valeur de démarrage (S), et cette valeur actuelle de la grandeur de temporisation ($R_{akt}$) indique la durée de temporisation (TR) jusqu'au début de la phase d'économie d'énergie (TE) dans le cycle d'éclairage actuel,

selon lequel, après l'écoulement d'une durée de temporisation (TR) définie par la grandeur de temporisation (RG), à partir du démarrage du procédé, la phase d'économie d'énergie (TE) est lancée, pendant laquelle la puissance d'éclairage (P) de l'ensemble d'éclairage (11) est réduite.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4418315 C2
- DE 29623881 U1
- GB 2143966 A
- WO 2007091175 A1
- WO 2006126240 A1
- US RE38036 E
- DE 102005020406 A1
- FR 2847760 A1
- EP 1286570 A1